# EUROPEAN PATENT SPECIFICATION

(11) **EP 3 835 268 B1**
(45) Date of publication and mention of the grant of the patent: **10.07.2024**
(21) Application number: 19917720.5
(22) Date of filing: 30.08.2019
(51) Int. Cl.: C02F 11/06, C02F 11/12, C02F 11/14, B01D 53/50, B01D 53/78, C02F 11/125, C02F 11/18

(54) **FACILITY AND METHOD FOR TREATING ORGANIC SLUDGE**
ANLAGE UND VERFAHREN ZUR BEHANDLUNG VON ORGANISCHEM SCHLAMM
INSTALLATION ET PROCÉDÉ DE TRAITEMENT DE BOUES ORGANIQUES

(30) Priority: 01.03.2019 JP 2019037781
(43) Date of publication of application: 16.06.2021
(73) Proprietor: Tsukishima JFE Aqua Solution Co., Ltd., Tokyo (JP)
(72) Inventor: NAGASAWA, Hidekazu, Tokyo 104-0053 (JP); KAWAGISHI, Masayasu, Tokyo 104-0053 (JP); YAMATO, Tsuneo, Tokyo 104-0053 (JP); KOBAYASHI, Toshiki, Tokyo 104-0053 (JP)
(74) Representative: Müller-Boré & Partner Patentanwälte PartG mbB
(86) International application number: PCT/JP2019/034129
(87) International publication number: WO 2020/179105

(56) References cited:
- JP-A- 2009 214 087
- JP-A- 2013 099 727
- JP-A- 2017 213 479
- JP-A- 2018 155 484
- No further relevant documents disclosed

## Description

### [Technical Field]

The present invention relates to an organic sludge treatment facility including a thickening device that thickens organic sludge coagulated by adding a coagulant to sewage sludge or the like generated from, for example, a sewage treatment plant, a dewatering device that dewaters the organic sludge thickened by the thickening device, an incinerator that incinerates the organic sludge dewatered by the dewatering device, and a smoke effluent treatment tower that performs a treatment (such as dust removal, neutralization removal of acid gas such as sulfur oxide, or cooling dehumidification) on combustion exhaust gas generated by the incinerator, and a treatment method.

For example, Japanese unexamined patent application JP 2017 213479 A describes an organic sludge treatment facility including a first thickening section that thickens sludge to generate thickened sludge, a dewatering section that receives the thickened sludge generated in the first thickening section as dewatering target sludge to dewater the dewatering target sludge while heating it with an indirect heating system such as a screw press type dewatering device, and an addition section that adds an inorganic coagulant to the thickened sludge, in which a temperature of a heat medium which is used for heating the dewatering target sludge in the dewatering section is lower than 100 °C, and a treatment method.

In JP 2017 213479 A, according to such an organic sludge treatment facility and treatment method, since the sludge is dewatered while being heated in the dewatering section, the viscosity of the sludge is reduced and a water retaining force of the sludge is reduced by thermal denaturation. Therefore, a filtration solution is easily separated, and a moisture content of dewatered sludge (dewatering sludge) can be reduced.

JP 2009 214087 A describes an improvement of a sewage sludge treatment method for dewatering and incinerating sewage sludge generated from a sewage treatment plant.

JP 2018 155484 A describes a system for incinerating or gasifying an organic waste such as sludge from a sewage treatment facility or a municipal waste so as to recover waste energy generated in the entire system as much as possible, and a control method for maximizing the power generation amount of the power generation device using the power generation device.

### [Summary of Invention]

### [Technical Problem]

Incidentally, in the treatment facility and treatment method described in JP 2017 213479 A, the heat medium is heated by the combustion waste heat generated when the dewatered sludge is incinerated in the incinerator, scrubber wastewater cooled by causing the combustion exhaust gas to come into contact with the cooling water in a scrubber (smoke effluent treatment tower) is used as a heat medium, or hot water that is heat-exchanged with the scrubber wastewater is used as the heat medium. Therefore, the heat medium is supplied to the screw press type dewatering device or the like as described above to heat the thickened sludge which is the dewatering target sludge by the indirect heating system. However, for example, it is conceivable to heat (warm) the thickened sludge of the thickening device and the dewatered sludge of the dewatering device by directly supplying hot water and mixing them.

Here, in a case where the hot water that is heated by combustion waste heat of the incinerator or the hot water that is heat-exchanged with the scrubber wastewater is directly supplied as a heat medium to the thickened sludge of the thickening device and the dewatered sludge of the dewatering device to be mixed, the supplied hot water comes into direct contact with the sludge, and thereby the hot water cannot be circulated and reused. Therefore, a used amount of the hot water (heat medium) is significantly increased.

Further, even if the scrubber wastewater cooled by causing the combustion exhaust gas to come into contact with the cooling water in the scrubber is directly supplied as the hot water (heat medium) to the thickened sludge of the thickening device and the dewatered sludge of the dewatering device, the scrubber wastewater comes into direct contact with dust in the combustion exhaust gas. Therefore, it has a large amount of an insoluble solid content (SS component), and once an alkaline component is added for an acid gas treatment of the combustion exhaust gas, it contains an unreacted alkaline component. Thus, the thickened sludge and the dewatered sludge may be deteriorated. Further, since the unreacted alkaline component cannot be circulated and used, the used amount of the alkaline component also increases.

The present invention is made under such a background, and an object of the present invention is to provide an organic sludge treatment facility and a treatment method in which, in a case where hot water is directly supplied to thickened sludge of a thickening device and dewatered sludge of a dewatering device to warm them, since an increase in the used amount of the hot water that cannot be circulated and reused, and the hot water of a quality that does not cause deterioration of sludge are required, wastewater of a smoke effluent treatment tower (scrubber) is supplied as the hot water that does not cause deterioration of thickened sludge or dewatered sludge by reducing an insoluble solid content (SS component) and reducing an unreacted alkaline component, and an increase in a used amount of the alkaline component in the smoke effluent treatment tower can be prevented.

### [Solution to Problem]

The present invention is defined by the independent claims. Further aspects are defined in the dependent claims. In particular, there is provided an organic sludge treatment facility including: a thickening device configured to thicken organic sludge; a dewatering device configured to dewater the organic sludge thickened by the thickening device; an incinerator configured to incinerate the organic sludge dewatered by the dewatering device; and a smoke effluent treatment tower configured to treat combustion exhaust gas generated by the incinerator. The smoke effluent treatment tower includes a first cooling section that supplies first cooling water to the combustion exhaust gas to cool and desulfurize the combustion exhaust gas at a lower portion in the smoke effluent treatment tower, and a second cooling section that supplies second cooling water to the combustion exhaust gas cooled and desulfurized by the first cooling section to cool the combustion exhaust gas at an upper portion in the smoke effluent treatment tower. Hot water supply means is provided for directly warming the organic sludge, the hot water supply means is configured to supply, as hot water, the second cooling water by which the combustion exhaust gas is cooled in the second cooling section to at least one of the thickening device and the dewatering device so that the hot water supplied to the thickening device and/or the dewatering device is mixed with the organic sludge to directly warm the organic sludge.

Further, an organic sludge treatment method including: dewatering organic sludge, which is thickened by a thickening device, by a dewatering device; incinerating the organic sludge, which is dewatered by the dewatering device, by an incinerator; and treating combustion exhaust gas, which is generated by the incinerator, in a smoke effluent treatment tower. The smoke effluent treatment tower includes a first cooling section that supplies first cooling water to the combustion exhaust gas to cool and desulfurize the combustion exhaust gas at a lower portion in the smoke effluent treatment tower, and a second cooling section that supplies second cooling water to the combustion exhaust gas cooled and desulfurized by the first cooling section to be cooled at an upper portion in the smoke effluent treatment tower. The second cooling water by which the combustion exhaust gas is cooled in the second cooling section is supplied as hot water to at least one of the thickening device and the dewatering device by hot water supply means and the hot water supplied to the thickening device and/or the dewatering device is mixed with the organic sludge to directly warm the organic sludge.

In such an organic sludge treatment facility and treatment method, an alkaline component for acid gas treatment of the combustion exhaust gas is contained in the first cooling water for desulfurizing the combustion exhaust gas, and the first cooling water is circulated and used in the first cooling section at the lower portion in the smoke effluent treatment tower. Therefore, it is possible to prevent the unreacted alkaline component from being discharged and prevent the used amount of the alkaline component from increasing.

Then, in the second cooling section at the upper portion of the smoke effluent treatment tower, the combustion exhaust gas, in which the acid gas is treated by being cooled and desulfurized by the first cooling section, and from which the dust is also collected, is cooled by the second cooling water. Therefore, the second cooling water, which becomes hot water, is supplied by the hot water supply means to at least one of the thickening device and the dewatering device to directly warm the organic sludge, such that it is possible to avoid deterioration of the thickened organic sludge or the dewatered organic sludge due to the insoluble solid content (SS component), the unreacted alkaline component, or the acid gas component in the dust.

Moreover, the supply amount of the second cooling water in the second cooling section is several to ten times the circulation amount of the first cooling water in the first cooling section. Thus, there is no need to circulate and reuse the hot water which is supplied to the thickening device and the dewatering device to come into direct contact with the organic sludge.

Here, the second cooling water by which the combustion exhaust gas is cooled may be supplied to the thickening device and the dewatering device to be mixed with the organic sludge. However, in a case where the temperature of the second cooling water discharged from the second cooling section is low enough to make it difficult to sufficiently reduce the moisture content of the organic sludge, first, the hot water supply means includes the first heat exchanger that indirectly exchanges heat between the first cooling water by which the combustion exhaust gas is cooled in the first cooling section and the second cooling water by which the combustion exhaust gas is cooled in the second cooling section. The temperature of the second cooling water supplied as the hot water may be raised by heat exchange by the first heat exchanger.

Further, in a case where the temperature of the second cooling water discharged from the second cooling section is also low, second, the hot water supply means includes the second heat exchanger that indirectly exchanges heat between the combustion exhaust gas supplied to the smoke effluent treatment tower and the second cooling water by which the combustion exhaust gas is cooled in the second cooling section. The temperature of the second cooling water supplied as the hot water may be raised by heat exchange by the second heat exchanger.

It is preferable that the temperature of the second cooling water supplied as hot water by the hot water supply means be in a range of 50 °C or higher and lower than 100 °C. When the temperature of the second cooling water is lower than 50 °C, it is not possible to sufficiently reduce the viscosity of the organic sludge described above and the moisture content by separating moisture. Further, when the temperature of the hot water is 100 °C or higher, it becomes difficult to handle.

### [Advantageous Effects of Invention]

As described above, according to the present invention, in a case where the hot water is directly supplied to the thickened sludge of the thickening device and the dewatered sludge of the dewatering device to warm them, the wastewater from the second cooling section of the smoke effluent treatment tower, of which an amount is large and that does not need to be circulated and reused, can be supplied as the hot water. Further the deterioration of the thickened sludge and dewatered sludge can be avoided, and the amount of an alkaline component used to treat the acid gas of the combustion exhaust gas can be prevented from increasing.

### [Brief Description of the Drawings]

Fig. 1 is a schematic diagram showing an embodiment of an organic sludge treatment facility of the present invention.
Fig. 2 is a sectional view of a smoke effluent treatment tower according to the embodiment shown in Fig. 1.

### [Description of Embodiments]

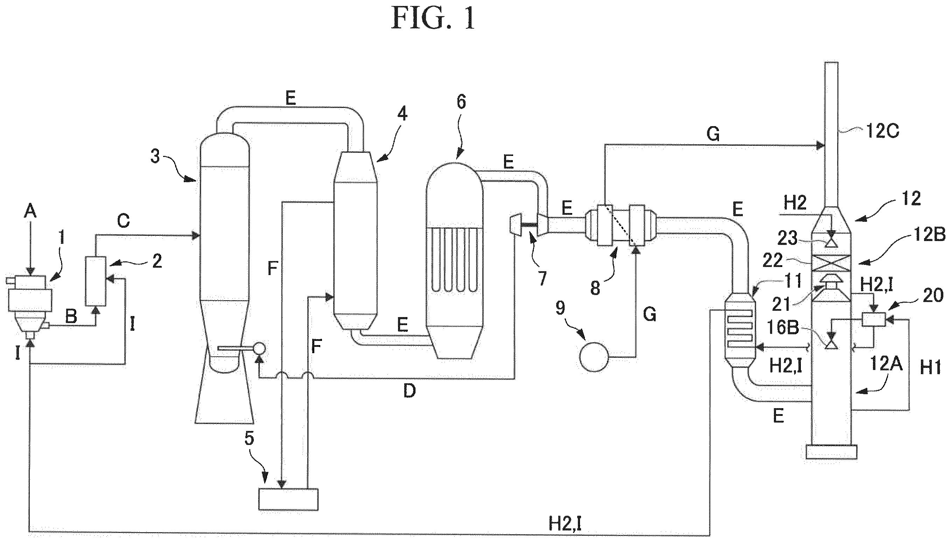

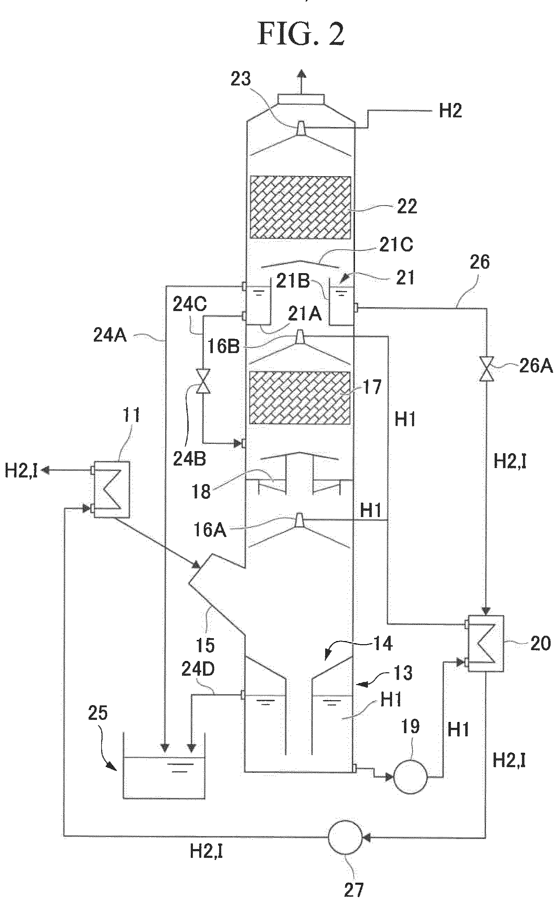

Figs. 1 and 2 show an embodiment of an organic sludge treatment facility of the present invention, and an embodiment of an organic sludge treatment method of the present invention will also be described below while describing the organic sludge treatment facility of the present embodiment.

The organic sludge treatment facility of the present embodiment includes a coagulation device (not shown) that coagulates organic sludge such as sewage sludge of mixed raw sludge generated and supplied, for example, from a sewage treatment plant by adding a polymer coagulant to the organic sludge, a thickening device 1 that thickens coagulated sludge A of which a solid content is coagulated to some extent by the coagulation device, and a dewatering device 2 that dewaters thickened sludge B thickened by the thickening device 1 to a sludge concentration in a range of 5 wt% or more, preferably of 8 wt% to 10 wt%. An inorganic coagulant such as poly-ferric sulfate (PFS) or the like and a coagulant such as a polymer coagulant may be added to the thickened sludge B supplied to the dewatering device 2.

In the dewatering device 2, the thickened sludge B is dewatered to about 70 wt% to 74 wt% of moisture to form dewatered sludge C, and the dewatered sludge C thus dewatered is supplied to an incinerator 3 and incinerated. The incinerator 3 is a supercharging type fluidized incinerator in the present embodiment, and the dewatered sludge C supplied to the incinerator 3 is burned at a high temperature of about 130 °C and a high pressure of combustion air D supplied from a supercharger described below while flowing together with a flowing medium by the combustion air D. Therefore, combustion exhaust gas E having a high temperature of about 850 °C is generated.

The combustion exhaust gas E is supplied to a waste heat boiler 4, is cooled to about 500 °C by heat exchange with the heat medium F supplied from a heat utilization facility 5, and is further supplied to a dust collector 6 to collect dust, thereby being cooled to about 470 °C, and then is supplied to the supercharger 7 to pressurize the combustion air D that is supplied to the incinerator 3. The heat utilization facility 5 includes, for example, a dryer and an electric generator.

The combustion exhaust gas E of about 400 °C discharged from the supercharger 7 is supplied to a white smoke prevention preheater 8, and is cooled to about 320 °C by preheating white smoke prevention air G supplied from a fan 9 to the white smoke prevention preheater 8.

The combustion exhaust gas E cooled in the white smoke prevention preheater 8 is supplied to a hot water boiler 11 serving as a second heat exchanger in the present embodiment, further cooled to about 200 °C, and is supplied to a first cooling section (adiabatic cooling section and desulfurization section) 12A at a lower portion of the smoke effluent treatment tower 12 as shown in Fig. 2. The smoke effluent treatment tower 12 includes a circulation tank 13 of the first cooling water H1 at a bottom, and a funnel-shaped water collection section 14 is provided at an upper portion of the circulation tank 13. The combustion exhaust gas E discharged from the hot water boiler 11 is supplied into the smoke effluent treatment tower 12 from the supply section 15 provided above the water collection section 14.

Further, above the supply section 15, a first nozzle 16A and a second nozzle 16B that spray the first cooling water H1 into the first cooling section 12A of the smoke effluent treatment tower 12 are disposed to be vertically spaced apart from each other. A space from the upper second nozzle 16B to the water collection section 14 is referred to as the first cooling section 12A. In addition, between the first nozzle 16A and the second nozzle 16B, a first filler 17 is disposed above with a gap from the second nozzle 16B, and a propeller-shaped vane (blade) 18 is provided below the first filler 17 around a center line of the smoke effluent treatment tower 12.

The first cooling water H1 held in the circulation tank 13 is sprayed by the first pump 19 into the first cooling section 12A from the first and second nozzles 16A and 16B via the first heat exchanger 20 in the present embodiment and adiabatically cools the combustion exhaust gas E supplied into the smoke effluent treatment tower 12. Further, an alkaline component (for example, caustic soda or the like) is added to the first cooling water H1, and acid gas contained in the combustion exhaust gas E is treated and desulfurized, and dust, which cannot be collected by the dust collector 6, is also removed by the first cooling water H1.

Here, the combustion exhaust gas E that rises above the first nozzle 16A becomes a swirling flow in the vane 18, and a contact efficiency with the first cooling water H1 sprayed from the second nozzle 16B is enhanced. Next, the combustion exhaust gas E further comes into contact with the first cooling water H1 held by the first filler 17 while passing through the first filler 17 to be cooled to about 74 °C to 85 °C. Thus, the combustion exhaust gas E rises inside the smoke effluent treatment tower 12 and is supplied to the second cooling section (super-cooling section) 12B at the upper portion of the smoke effluent treatment tower 12. The first cooling water H1 sprayed from the first and second nozzles 16A and 16B is collected in the circulation tank 13 by the water collection section 14 and circulated for use.

In the second cooling section 12B, above the second nozzle 16B of the first cooling section 12A, a bottom portion 21A joined to an inner wall of the smoke effluent treatment tower 12 in an annular plate shape, a cylindrical wall portion 21B joined to extend upward from an inner peripheral edge of the bottom portion 21A, and an umbrella portion 21C in a conical plate shape having an outer diameter larger than an outer diameter of the wall portion 21B disposed above the wall portion 21B are provided. Among them, a space surrounded by the bottom portion 21A, the wall portion 21B, and the inner wall of the smoke effluent treatment tower 12 is referred to as the wastewater separation section 21. Further, a second filler 22 is disposed above the umbrella portion 21C, and a third nozzle 23 for spraying the second cooling water H2 into the second cooling section 12B is disposed further above the second filler 22.

The combustion exhaust gas E, which rises from the first cooling section 12A, passes through the wall portion 21B of the wastewater separation section 21, and is supplied to the second cooling section 12B, is come into contact with the second cooling water H2 which is sprayed from the third nozzle 23 and held in the second filler 22 to be super-cooled to about 40 °C. The combustion exhaust gas E cooled in this way is discharged to a chimney 12C at an upper end of the smoke effluent treatment tower 12, is mixed with the white smoke prevention air G supplied from the white smoke prevention preheater 8 to a second heat extraction boiler 10 as shown in Fig. 1 to prevent generation of the white smoke, and is discharged into the atmosphere.

On the other hand, the second cooling water H2 by which the combustion exhaust gas E is cooled is warmed to about 70 °C, drops from the second filler 22, is held by the wastewater separation section 21, or falls on an upper surface of the umbrella portion 21C, and then flows to an outer peripheral side to be held by the wastewater separation section 21. A first wastewater pipe 24A is connected to the inner wall of the smoke effluent treatment tower 12 slightly below an upper end edge of the wall portion 21B of the wastewater separation section 21. When a water level of the second cooling water H2 held by the wastewater separation section 21 reaches a connection position of the first wastewater pipe 24A, the second cooling water H2 is drained to the wastewater tank 25.

Further, a second wastewater pipe 24C having a valve 24B is connected to the inner wall of the smoke effluent treatment tower 12 slightly above the bottom portion 21A of the wastewater separation section 21 and the second cooling water H2 held by the wastewater separation section 21 can be drained between the first filler 17 and the vane 18 of the first cooling section 12A by opening the valve 24B. Further, a third wastewater pipe 24D is connected to the inner wall of the smoke effluent treatment tower 12 at a portion of the circulation tank 13, and when a water level of the first cooling water H1 in the circulation tank 13 reaches a connection position of the third wastewater pipe 24D, the first cooling water H1 is drained to the wastewater tank 25.

Furthermore, a fourth wastewater pipe 26 having a valve 26A is connected to the inner wall of the smoke effluent treatment tower 12 between the connection positions of the first and second wastewater pipes 24A and 24C in the wastewater separation section 21. The second cooling water H2 discharged from the fourth wastewater pipe 26 by opening the valve 26A is indirectly heated by the first cooling water H1 in the first heat exchanger 20 in the present embodiment.

Further, the second cooling water H2 heated by the first heat exchanger 20 in this way passes through the second pump 27 and is indirectly heated again by the combustion exhaust gas E in the hot water boiler 11 which is the second heat exchanger in the present embodiment, and is supplied to at least one of the thickening device 1 and the dewatering device 2 as hot water I at about 70 °C to 87 °C. In the present embodiment, the hot water I is supplied to both the thickening device 1 and the dewatering device 2, and is mixed, for example, with the thickened sludge B and the dewatered sludge C, which are the organic sludge, to directly warm them. That is, in the present embodiment, the hot water supply means is configured by the fourth wastewater pipe 26, the second pump 27, the first heat exchanger 20, and the hot water boiler 11 which is the second heat exchanger. The direct warming of the organic sludge by the hot water I may be performed by supplying the hot water I to the space between a filtration screen and a casing, for example, in a case where the dewatering device 2 is a screw press.

By heating the organic sludge of the thickened sludge B and the dewatered sludge C with the hot water I in this way, the viscosity of the organic sludge is lowered, and the moisture retained in the organic sludge is separated by the thermal denaturation of the protein. Then, the moisture separated from the organic sludge in this way is discharged together with the moisture discharged from the thickening device 1 and the dewatering device 2. Therefore, the moisture content of the organic sludge can be reduced. Further, since a filtration resistance is decreased by lowering the viscosity of the organic sludge, the discharge of the moisture separated from the organic sludge can be facilitated.

Then, in the organic sludge treatment facility and treatment method having the configuration described above, the hot water I supplied to the thickening device 1 and the dewatering device 2 is the second cooling water H2 by which the combustion exhaust gas E is cooled in the second cooling section 12B, in which the acid gas is treated by being cooled and desulfurized by the first cooling water H1 and from which dust is also collected, in the first cooling section 12A in the smoke effluent treatment tower 12. Therefore, it is possible to avoid mixing the insoluble solid content (SS component) in dust of the combustion exhaust gas E, the unreacted alkaline component or the acid gas component in the first cooling water H1 with the thickened sludge B or the dewatered sludge C. Therefore, it is possible to prevent the thickened sludge B and the dewatered sludge C from deteriorating due to the insoluble solid content (SS component), the unreacted alkaline component, and the acid gas component.

Further, the alkaline component for the acid gas treatment of the combustion exhaust gas E is contained in the first cooling water H1 that cools and desulfurizes the combustion exhaust gas E in the first cooling section 12A. Since the first cooling water H1 is circulated and used in the first cooling section 12A at the lower portion in the smoke effluent treatment tower 12, it is possible to suppress the discharge of the unreacted alkaline component, and prevent the used amount of the alkaline component from increasing.

Further, since the supply amount of the second cooling water H2 in the second cooling section 12B is several to ten times the circulation amount of the first cooling water H1 in the first cooling section 12A, it is not necessary to circulate and reuse the hot water I which is supplied to the thickening device 1 and the dewatering device 2, and comes into direct contact with the organic sludge of the thickened sludge B and the dewatered sludge C. Therefore, it is possible to prevent the used amount of hot water I (second cooling water H2) from increasing more than necessary.

In the present embodiment, because the temperature of the second cooling water H2 held by the wastewater separation section 21 and drained from the fourth wastewater pipe 26 is sufficiently high, at about 70 °C, the second cooling water H2 may be directly supplied to the thickening device 1 and the dewatering device 2 by the second pump 27. However, in a case where the temperature of the combustion exhaust gas E generated in the incinerator 3 is low, the second cooling water H2 having such a high temperature cannot be supplied as the hot water I, and it may be difficult to effectively reduce the moisture contents of the thickened sludge B and the dewatered sludge C.

On the other hand, in the present embodiment, first, the hot water supply means includes the first heat exchanger 20 that indirectly exchanges heat between the first cooling water H1 by which the combustion exhaust gas E is cooled in the first cooling section 12A and the second cooling water H2 supplied to the thickening device 1 and the dewatering device 2 as the hot water I by cooling the combustion exhaust gas E in the second cooling section 12B. Therefore, by the first cooling water H1 having a high temperature by which the combustion exhaust gas E supplied to the first cooling section 12A is cooled from a temperature higher than that of the second cooling section 12B, the temperature of the second cooling water H2 supplied as the hot water I can be raised.

Further, in the present embodiment, second, the hot water supply means also includes the hot water boiler 11 as the second heat exchanger to indirectly exchange heat between the combustion exhaust gas E supplied to the smoke effluent treatment tower 12 and the second cooling water H2 by which the combustion exhaust gas E is cooled in the second cooling section 12B. Therefore, the temperature of the second cooling water H2 supplied as the hot water I to the thickening device 1 and the dewatering device 2 by the second heat exchanger can be raised.

It is preferable that the temperature of the second cooling water H2, which is supplied to the thickening device 1 and the dewatering device 2 as the hot water I by the hot water supply means, be in a range of 50 °C or higher and lower than 100 °C. When the temperature of the second cooling water H2 is lower than 50 °C, reduction of the moisture content by lowering the viscosity of the organic sludge and separating the moisture cannot be sufficiently obtained. On the other hand, when the temperature of the hot water I is higher than 100 °C, it becomes difficult to handle. It is more preferable that the temperature of the second cooling water H2 supplied as the hot water I be in a range of 60 °C or higher and 90 °C or lower.

Further, in the present embodiment, the hot water I is supplied to both the thickening device 1 and the dewatering device 2, but it may be supplied to only one of them. Further, in a case where the temperature of the hot water I is sufficiently high or the like, the hot water I is supplied to both the thickening device 1 and the dewatering device 2 at the same time, or the hot water I is supplied only to the dewatering device 2 without supplying it to the thickening device 1, and thereby the moisture (filtration solution) separated from the dewatered sludge C in the dewatering device 2 may be supplied to the thickening device 1 together with the hot water I.

### [Industrial Applicability]

By applying the organic sludge treatment facility and the treatment method of the present invention in the relevant field, in a case where the hot water is directly supplied to the thickening device and the dewatering device for warming, it is possible to supply the wastewater of the smoke effluent treatment tower as the hot water, prevent the sludge from being deteriorated by the hot water and prevent the amount of alkaline components used in the smoke effluent treatment tower from increasing.

### [Reference Signs List]

1: Thickening device
2: Dewatering device
3: Incinerator
4: Waste heat boiler
5: Heat utilization facility
6: Dust collector
7: Supercharger
8: White smoke prevention preheater
9: Fan
11: Hot water boiler (second heat exchanger)
12: Smoke effluent treatment tower
12A: First cooling section
12B: Second cooling section
12C: Chimney
13: Circulation tank
14: Water collection section
15: Supply section
19: First pump
20: First heat exchanger
21: Wastewater separation section
25: Wastewater tank
26: Fourth wastewater pipe
27: Second pump
A: Coagulated sludge
B: Thickened sludge
C: Dewatered sludge
D: Combustion air
E: Combustion exhaust gas
H1: First cooling water
H2: Second cooling water
I: Hot water

## Claims

1. An organic sludge treatment facility comprising:
a thickening device (1) configured to thicken organic sludge;
a dewatering device (2) configured to dewater the organic sludge thickened by the thickening device (1);
an incinerator (3) configured to incinerate the organic sludge dewatered by the dewatering device (2); and
a smoke effluent treatment tower (12) configured to treat combustion exhaust gas generated by the incinerator (3),
wherein the smoke effluent treatment tower (12) includes a first cooling section (12A) that is configured to supply first cooling water (H1) to the combustion exhaust gas (E) to cool and desulfurize the combustion exhaust gas (E) at a lower portion in the smoke effluent treatment tower (12), and a second cooling section (12B) that is configured to supply second cooling water (H2) to the combustion exhaust gas (E) cooled and desulfurized by the first cooling section (12A) to cool the combustion exhaust gas (E) at an upper portion in the smoke effluent treatment tower (12),
**characterized in that**
hot water supply means (11, 20, 26, 27) is provided for directly warming the organic sludge,
wherein the hot water supply means (11, 20, 26, 27) is configured to supply, as hot water, the second cooling water (H2) by which the combustion exhaust gas (E) is cooled in the second cooling section (12B) to at least one of the thickening device (1) and the dewatering device (2) so that the hot water supplied to the thickening device (1) and/or the dewatering device (2) is mixed with the organic sludge to directly warm the organic sludge.

2. The organic sludge treatment facility according to Claim 1,
wherein the hot water supply means (11, 20, 26, 27) includes a first heat exchanger (20) that is configured to indirectly exchange heat between the first cooling water (H1) by which the combustion exhaust gas (E) is cooled in the first cooling section (12A) and the second cooling water (H2) by which the combustion exhaust gas (E) is cooled in the second cooling section (12B).

3. The organic sludge treatment facility according to Claim 1 or 2,
wherein the hot water supply means (11, 20, 26, 27) includes a second heat exchanger (11) that is configured to indirectly exchange heat between the combustion exhaust gas (E) supplied to the smoke effluent treatment tower (12) and the second cooling water (H2) by which the combustion exhaust gas (E) is cooled in the second cooling section (12B).

4. The organic sludge treatment facility according to any one of Claims 1 to 3,
wherein the hot water supply means (11, 20, 26, 27) is configured to supply the hot water having a temperature in a range of 50 °C or higher and lower than 100 °C to at least one of the thickening device (1) and the dewatering device (2).

5. An organic sludge treatment method comprising:
dewatering organic sludge, which is thickened by a thickening device (1), by a dewatering device (2);
incinerating the organic sludge, which is dewatered by the dewatering device (2), by an incinerator (3); and
treating combustion exhaust gas (E), which is generated by the incinerator (3), in a smoke effluent treatment tower (12),
wherein the smoke effluent treatment tower (12) includes a first cooling section (12A) that supplies first cooling water (H1) to the combustion exhaust gas (E) to cool and desulfurize the combustion exhaust gas (E) at a lower portion in the smoke effluent treatment tower (12), and a second cooling section (12B) that supplies second cooling water (H2) to the combustion exhaust gas (E) cooled and desulfurized by the first cooling section (12A) to cool the combustion exhaust gas (E) at an upper portion in the smoke effluent treatment tower (12),
**characterized in that**
the second cooling water (H2) by which the combustion exhaust gas (E) is cooled in the second cooling section (12B) is supplied as hot water to at least one of the thickening device (1) and the dewatering device (2) by hot water supply means (11, 20, 26, 27) and the hot water supplied to the thickening device (1) and/or the dewatering device (2) is mixed with the organic sludge to directly warm the organic sludge.

6. The organic sludge treatment method according to Claim 5,
wherein the hot water supply means (11, 20, 26, 27) includes a first heat exchanger (20) and indirect heat exchange is performed by the first heat exchanger (20) between the first cooling water (H1) by which the combustion exhaust gas (E) is cooled in the first cooling section (12A) and the second cooling water (H2) by which the combustion exhaust gas (E) is cooled in the second cooling section (12B).

7. The organic sludge treatment method according to Claim 5 or 6,
wherein the hot water supply means (11, 20, 26, 27) includes a second heat exchanger (11) and indirect heat exchange is performed by the second heat exchanger (11) between the combustion exhaust gas (E) supplied to the smoke effluent treatment tower (12) and the second cooling water (H2) by which the combustion exhaust gas (E) is cooled in the second cooling section (12B).

8. The organic sludge treatment method according to any one of Claims 5 to 7,
wherein the hot water having a temperature in a range of 50 °C or higher and lower than 100 °C is supplied by the hot water supply means (11, 20, 26, 27) to at least one of the thickening device (1) and the dewatering device (2).

## Patentansprüche

1. Anlage zur Behandlung von organischem Schlamm, wobei die Anlage aufweist:
eine Eindickungsvorrichtung (1), die zum Eindicken von organischem Schlamm konfiguriert ist;
eine Entwässerungsvorrichtung (2), die konfiguriert ist, den vermittels der Eindickungsvorrichtung (1) eingedickten organischen Schlamm zu entwässern;
eine Verbrennungsanlage (3), die konfiguriert ist, den vermittels der Entwässerungsvorrichtung (2) entwässerten organischen Schlamm zu verbrennen; und
einen Rauchabgasbehandlungsturm (12), welcher derart konfiguriert ist, dass er das von der Verbrennungsanlage (3) erzeugte Verbrennungsabgas behandelt,
wobei der Rauchabgasbehandlungsturm (12) einen ersten Kühlabschnitt (12A), der konfiguriert ist, dem Verbrennungsabgas (E) ein erstes Kühlwasser (H1) zuzuführen, um das Verbrennungsabgas (E) an einem unteren Teil in dem Rauchabgasbehandlungsturm (12) zu kühlen und zu entschwefeln, sowie einen zweiten Kühlabschnitt (12B) aufweist, der konfiguriert ist, dem Verbrennungsabgas (E) ein zweites Kühlwasser (H2) zuzuführen, das vermittels des ersten Kühlabschnitts (12A) gekühlt und entschwefelt wurde, um das Verbrennungsabgas (E) an einem oberen Teil in dem Rauchabgasbehandlungsturm (12) zu kühlen, **dadurch gekennzeichnet, dass**
eine Heißwasserzufuhreinrichtung (11, 20, 26, 27) vorgesehen ist, um den organischen Schlamm direkt zu erhitzen,
die Heißwasserzufuhreinrichtung (11, 20, 26, 27) konfiguriert ist, als Heißwasser das zweite Kühlwasser (H2), mit dem das Verbrennungsabgas (E) in dem zweiten Kühlabschnitt (12B) gekühlt wird, an die Eindickungsvorrichtung (1) und/oder die Entwässerungsvorrichtung (2) zuzuführen, so dass das der Eindickungsvorrichtung (1) und/oder der Entwässerungsvorrichtung (2) zugeführte Heißwasser mit dem organischen Schlamm gemischt wird, um den organischen Schlamm direkt zu erhitzen.

2. Anlage zur Behandlung von organischem Schlamm nach Anspruch 1,
wobei die Heißwasserzufuhreinrichtung (11, 20, 26, 27) einen ersten Wärmetauscher (20) aufweist, der konfiguriert ist, indirekten Wärmetausch zwischen dem ersten Kühlwasser (H1), mittels dem das Verbrennungsabgas (E) in dem ersten Kühlabschnitt (12A) gekühlt wird, und dem zweiten Kühlwasser (H2), mittels dem das Verbrennungsabgas (E) in dem zweiten Kühlabschnitt (12B) gekühlt wird, zu bewirken.

3. Anlage zur Behandlung von organischem Schlamm nach Anspruch 1 oder 2,
wobei die Heißwasserzufuhreinrichtung (11, 20, 26, 27) einen zweiten Wärmetauscher (11) aufweist, der konfiguriert ist, indirekten Wärmetausch zwischen dem Verbrennungsabgas (E), das dem Rauchabgasbehandlungsturm (12) zugeführt wird, und dem zweiten Kühlwasser (H2), durch das das Verbrennungsabgas (E) in dem zweiten Kühlabschnitt (12B) gekühlt wird, zu bewirken.

4. Anlage zur Behandlung von organischem Schlamm nach einem der Ansprüche 1 bis 3,
wobei die Heißwasserzufuhreinrichtung (11, 20, 26, 27) konfiguriert ist, das Heißwasser mit einer Temperatur von 50 °C oder höher und weniger als 100 °C der Verdickungsvorrichtung (1) und/oder der Entwässerungsvorrichtung (2) zuzuführen.

5. Verfahren zur Behandlung von organischem Schlamm, wobei das Verfahren umfasst:
Entwässern von organischem Schlamm, der durch eine Eindickungsvorrichtung (1) eingedickt ist, vermittels einer Entwässerungsvorrichtung (2);
Verbrennen des organischen Schlamms, der vermittels der Entwässerungsvorrichtung (2) entwässert wird, vermittels einer Verbrennungsanlage (3); und
Behandeln eines Verbrennungsabgases (E), das von der Verbrennungsanlage (3) erzeugt wird, in einem Rauchabgasbehandlungsturm (12),
wobei der Rauchabgasbehandlungsturm (12) einen ersten Kühlabschnitt (12A), der dem Verbrennungsabgas (E) ein erstes Kühlwasser (H1) zuführt, um das Verbrennungsabgas (E) an einem unteren Teil in dem Rauchabgasbehandlungsturm (12) zu kühlen und zu entschwefeln, sowie einen zweiten Kühlabschnitt (12B) aufweist, der ein zweites Kühlwasser (H2) an das durch den ersten Kühlabschnitt (12A) gekühlte und entschwefelte Verbrennungsabgas (E) zuführt, um das Verbrennungsabgas (E) an einem oberen Teil in dem Rauchabgasbehandlungsturm (12) zu kühlen,
**dadurch gekennzeichnet, dass**
das zweite Kühlwasser (H2), mit dem das Verbrennungsabgas (E) in dem zweiten Kühlabschnitt (12B) gekühlt wird, als Heißwasser an die Eindickungsvorrichtung (1) und/oder die Entwässerungsvorrichtung (2) mittels einer Heißwasserzufuhreinrichtung (11, 20, 26, 27) zugeführt wird, und das der Eindickungsvorrichtung (1) und/oder der Entwässerungsvorrichtung (2) zugeführte Heißwasser mit dem organischen Schlamm gemischt wird, um den organischen Schlamm direkt zu erhitzen.

6. Verfahren zur Behandlung von organischem Schlamm nach Anspruch 5,
wobei die Heißwasserzufuhreinrichtung (11, 20, 26, 27) einen ersten Wärmetauscher (20) aufweist, und indirekter Wärmetausch durch den ersten Wärmetauscher (20) zwischen dem ersten Kühlwasser (H1), mittels dem das Verbrennungsabgas (E) in dem ersten Kühlabschnitt (12A) gekühlt wird, und dem zweiten Kühlwasser (H2), mittels dem das Verbrennungsabgas (E) in dem zweiten Kühlabschnitt (12B) gekühlt wird, bewirkt wird.

7. Verfahren zur Behandlung von organischem Schlamm nach Anspruch 5 oder 6,
wobei die Heißwasserzufuhreinrichtung (11, 20, 26, 27) einen zweiten Wärmetauscher (11) aufweist und indirekter Wärmetausch durch den zweiten Wärmetauscher (11) zwischen dem Verbrennungsabgas (E), das dem Rauchabgasbehandlungsturm (12) zugeführt wird, und dem zweiten Kühlwasser (H2), mit dem das Verbrennungsabgas (E) in dem zweiten Kühlabschnitt (12B) gekühlt wird, bewirkt wird.

8. Verfahren zur Behandlung von organischem Schlamm nach einem der Ansprüche 5 bis 7,
wobei das Heißwasser, das eine Temperatur von 50 °C oder mehr und weniger als 100 °C aufweist, vermittels der Heißwasserzufuhreinrichtung (11, 20, 26, 27) an die Verdickungsvorrichtung (1) und/oder die Entwässerungsvorrichtung (2) zugeführt wird.

## Revendications

1. Installation de traitement de boues organiques, l'installation comprenant :
un dispositif d'épaississement (1), conçu pour épaissir les boues organiques ;
un dispositif d'assèchement (2), conçu pour assécher les boues organiques épaissies à l'aide du dispositif d'épaississement (1) ;
un incinérateur (3), conçu pour incinérer les boues organiques asséchées à l'aide du dispositif d'assèchement (2) ; et
une tour (12) de traitement d'effluent de type fumée, conçue pour traiter le gaz d'échappement de combustion produit par l'incinérateur (3),
la tour (12) de traitement de l'effluent de type fumée comprenant une première section de refroidissement (12A) conçue pour fournir une première eau de refroidissement (H1) au gaz d'échappement de combustion (E), afin de refroidir et de désulfurer le gaz d'échappement de combustion (E) au niveau d'une partie inférieure dans la tour (12) de traitement de l'effluent de type fumée, et une seconde section de refroidissement (12B) conçue pour fournir une seconde eau de refroidissement (H2) au gaz d'échappement de combustion (E) refroidi et désulfuré à l'aide de la première section de refroidissement (12A), afin de refroidir le gaz d'échappement de combustion (E) au niveau d'une partie supérieure dans la tour (12) de traitement de l'effluent de type fumée,
**caractérisée en ce que**
un moyen d'alimentation en eau chaude (11, 20, 26, 27) est prévu pour chauffer directement les boues organiques,
le moyen d'alimentation en eau chaude (11, 20, 26, 27) étant conçu pour fournir, en tant qu'eau chaude, la seconde eau de refroidissement (H2), moyennant laquelle le gaz d'échappement de combustion (E) est refroidi dans la seconde section de refroidissement (12B), à au moins un dispositif parmi le dispositif d'épaississement (1) et le dispositif d'assèchement (2), de sorte que l'eau chaude fournie au dispositif d'épaississement (1) et/ou au dispositif d'assèchement (2) soit mélangée avec les boues organiques afin de chauffer directement les boues organiques.

2. L'installation de traitement de boues organiques selon la Revendication 1,
dans laquelle le moyen d'alimentation en eau chaude (11, 20, 26, 27) comprend un premier échangeur de chaleur (20) conçu pour effectuer un échange de chaleur indirect entre la première eau de refroidissement (H1), moyennant laquelle le gaz d'échappement de combustion (E) est refroidi dans la première section de refroidissement (12A), et la seconde eau de refroidissement (H2), moyennant laquelle le gaz d'échappement de combustion (E) est refroidi dans la seconde section de refroidissement (12B).

3. L'installation de traitement de boues organiques selon les Revendications 1 ou 2,
dans laquelle le moyen d'alimentation en eau chaude (11, 20, 26, 27) comprend un second échangeur de chaleur (11) conçu pour effectuer un échange de chaleur indirect entre le gaz d'échappement de combustion (E), fourni à la tour (12) de traitement de l'effluent de type fumée, et la seconde eau de refroidissement (H2), moyennant laquelle le gaz d'échappement de combustion (E) est refroidi dans la seconde section de refroidissement (12B).

4. L'installation de traitement de boues organiques selon l'une quelconque des Revendications 1 à 3,
dans laquelle le moyen d'alimentation en eau chaude (11, 20, 26, 27) est conçu pour fournir l'eau chaude, présentant une température égale ou supérieure à 50 °C et inférieure à 100 °C, à au moins un dispositif parmi le dispositif d'épaississement (1) et le dispositif d'assèchement (2).

5. Procédé de traitement de boues organiques, le procédé comprenant :
l'assèchement des boues organiques, lesquelles sont épaissies à l'aide d'un dispositif d'épaississement (1), au moyen d'un dispositif d'assèchement (2) ;
l'incinération des boues organiques, lesquelles sont asséchées à l'aide du dispositif d'assèchement (2), au moyen d'un incinérateur (3) ; et
le traitement d'un gaz d'échappement de combustion (E), lequel est produit par l'incinérateur (3), dans une tour (12) de traitement d'effluent de type fumée,
la tour (12) de traitement de l'effluent de type fumée comprenant une première section de refroidissement (12A) destinée à fournir une première eau de refroidissement (H1) au gaz d'échappement de combustion (E), afin de refroidir et de désulfurer le gaz d'échappement de combustion (E) au niveau d'une partie inférieure dans la tour (12) de traitement de l'effluent de type fumée, et une seconde section de refroidissement (12B) destinée à fournir une seconde eau de refroidissement (H2) au gaz d'échappement de combustion (E) refroidi et désulfuré à l'aide de la première section de refroidissement (12A), afin de refroidir le gaz d'échappement de combustion (E) au niveau d'une partie supérieure dans la tour (12) de traitement de l'effluent de type fumée,
**caractérisé en ce que**
la seconde eau de refroidissement (H2), moyennant laquelle le gaz d'échappement de combustion (E) est refroidi dans la seconde section de refroidissement (12B), est fournie en tant qu'eau chaude à au moins un dispositif parmi le dispositif d'épaississement (1) et le dispositif d'assèchement (2) à l'aide d'un moyen d'alimentation en eau chaude (11, 20, 26, 27), et l'eau chaude fournie au dispositif d'épaississement (1) et/ou au dispositif d'assèchement (2) est mélangée avec les boues organiques afin de chauffer directement les boues organiques.

6. Le procédé de traitement de boues organiques selon la Revendication 5,
dans lequel le moyen d'alimentation en eau chaude (11, 20, 26, 27) comprend un premier échangeur de chaleur (20), et un échange de chaleur indirect est effectué par le premier échangeur de chaleur (20) entre la première eau de refroidissement (H1), moyennant laquelle le gaz d'échappement de combustion (E) est refroidi dans la première section de refroidissement (12A), et la seconde eau de refroidissement (H2), moyennant laquelle le gaz d'échappement de combustion (E) est refroidi dans la seconde section de refroidissement (12B).

7. Le procédé de traitement de boues organiques selon les Revendications 5 ou 6,
dans lequel le moyen d'alimentation en eau chaude (11, 20, 26, 27) comprend un second échangeur de chaleur (11), et un échange de chaleur indirect est effectué par le second échangeur de chaleur (11) entre le gaz d'échappement de combustion (E) fourni à la tour (12) de traitement de l'effluent de type fumée et la seconde eau de refroidissement (H2) moyennant laquelle le gaz d'échappement de combustion (E) est refroidi dans la seconde section de refroidissement (12B).

8. Le procédé de traitement de boues organiques selon l'une quelconque des Revendications 5 à 7,
dans lequel l'eau chaude, présentant une température égale ou supérieure à 50 °C et inférieure à 100 °C, est fournie à l'aide du moyen d'alimentation en eau chaude (11, 20, 26, 27) à au moins un dispositif parmi le dispositif d'épaississement (1) et le dispositif d'assèchement (2).
